# EUROPEAN PATENT SPECIFICATION

(11) **EP 3 296 599 B1**
(45) Date of publication and mention of the grant of the patent: **30.10.2019**
(21) Application number: 17188069.3
(22) Date of filing: 28.08.2017
(51) Int. Cl.: F16K 1/34, F16K 1/38, F16K 1/54, F16K 31/06

(54) **ELECTRIC VALVE**
ELEKTRISCHES VENTIL
SOUPAPE ÉLECTRIQUE

(30) Priority: 30.08.2016 JP 2016167834
(43) Date of publication of application: 21.03.2018
(60) Divisional application: 19193215.1
(73) Proprietor: Fujikoki Corporation, Tokyo 158-0082 (JP)
(72) Inventor: YOSHIDA, Tatsuya, Setagaya-ku,, Tokyo 158-0082 (JP); YAZAWA, Masashi, Setagaya-ku,, Tokyo 158-0082 (JP)
(74) Representative: Schweiger, Martin

(56) References cited:
- EP-A1- 2 843 272
- GB-A- 2 040 406
- JP-A- 2011 208 716
- US-A1- 2003 197 141
- US-A1- 2005 199 840
- US-A1- 2008 001 110

## Description

### TECHNICAL FIELD

The present invention relates to an electric valve which includes a valve main body, provided with a valve chamber and a valve opening (orifice), and a valve body changing a flow rate of a fluid flowing through the valve opening in response to a lift amount and more particularly to an electric valve suitable for controlling a flow rate of a refrigerant in a heat pump type cooling and heating system.

### BACKGROUND ART

As this kind of electric valve, for example, an electric valve disclosed in Patent Document 1 is known.

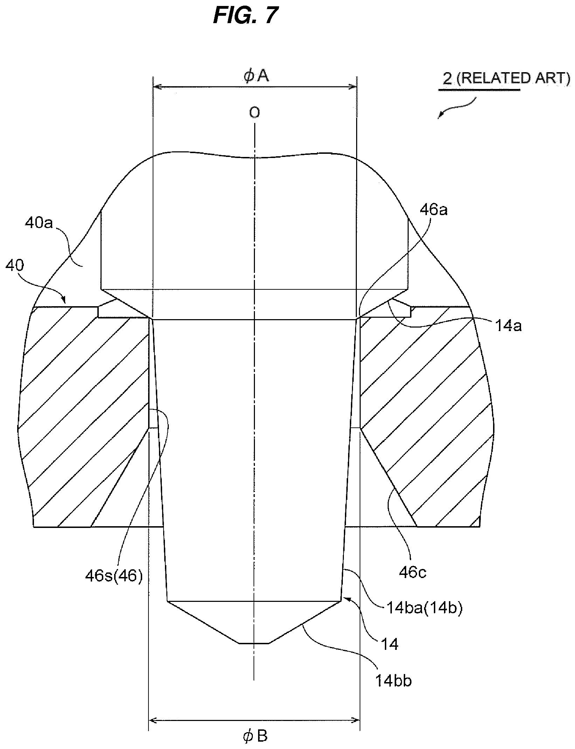

Fig. 7 illustrates a main part of an electric valve of the related art. An electric valve 2 of the related art includes a valve main body 40 which is provided with a valve chamber 40a, a valve seat 46a, and a valve opening 46 connected to the valve seat 46a and a valve body 14 which changes a flow rate of a fluid flowing through the valve opening 46 in response to a lift amount from the valve seat 46a. Here, as disclosed in, for example, Patent Document 1, the valve body 14 can be elevated to move toward and away from the valve seat 46a by a screw feed type lifting drive mechanism including a screw pipe (also referred to as a guide bush) provided with a male screw portion, a valve shaft holder provided with a female screw portion, and a stepping motor.

The valve body 14 includes a seat surface portion 14a which is formed as a reverse conical surface and sits on the valve seat 46a in a contact state and a curved surface portion 14b which is connected to the lower side (the front end side) of the seat surface portion 14a and changes a flow rate of a fluid flowing through the valve opening 46 in response to a lift amount. The curved surface portion 14b includes a plurality of stages (here, two stages) of inverse truncated cone-shaped tapered surface portions (an upper tapered surface portion 14ba and a lower tapered surface portion 14bb) of which a control angle (an intersection angle with respect to a line parallel to the center axis O of the valve body 14) gradually increases while approaching toward a front end. In addition, as the curved surface portion 14b, there is known an ellipsoidal shape (an ellipsoidal surface) of which an outer peripheral surface is gradually bent to a greater extent (a curvature becomes larger) while approaching toward a front end.

Meanwhile, the valve opening 46 includes a narrowest portion 46s which is formed as a cylindrical surface connected to the valve seat 46a and a large-diameter portion 46c which is formed as a truncated conical surface connected to the lower side of the narrowest portion 46s and of which an inner diameter increases while approaching downward.

US 2008/001110 A1 discloses a compact flow control valve with high flow stability. The control valve includes a valve body, which includes a first passage that is formed in the valve body, a valve port communicating with the first passage, and a valve seat formed around the valve port. The control valve also includes a valve element that is movable into contact with and away from the valve seat, and a valve chamber that is formed around the valve seat. The control valve further includes a second passage communicating with the valve chamber, and a flow adjustment rod that is adjustable in position to change an opening degree of the valve element relative to the valve seat for adjusting the flow rate of a fluid allowed to flow in the valve chamber. The flow control valve further comprises an annular recess that is formed in an inner periphery of the valve seat and is formed surrounding the valve port for preventing radial deformation of the valve port when the valve element is moved into contact with the valve seat.

### CITATION LIST

### PATENT DOCUMENT

Patent Document 1: JP 2011-208716 A
Patent Document 2: US 2008/001110 A1

### SUMMARY OF THE INVENTION

### PROBLEM TO BE SOLVED BY THE INVENTION

Incidentally, in this kind of electric valve, there has been a recent demand for improving controllability in a low flow rate range due to the utilization of R32 refrigerant and the frequent partial load operation and the like. Also in a closed valve type electric valve used in a cooling and heating system such as a multi air conditioner, there has been a desire to reduce a rising flow rate.

However, in the electric valve of the related art illustrated in Fig. 7, the rising flow rate is formed by a difference between the opening diameter (ϕB) of the narrowest portion 46s of the valve opening 46 and the outer diameter (ϕA) of the intersection portion between the seat surface portion 14a and the curved surface portion 14b (the upper tapered surface portion 14ba) and the dimension measurement (particularly, the dimension measurement using a contact type measurement unit) for the outer diameter (ϕA) of the intersection portion is complex. For this reason, a problem arises in that the rising flow rate is not easily managed.

In order to handle such a problem, a method is examined in which a straight portion having a constant outer diameter in the elevation direction (the direction of the center axis O) is provided between the seat surface portion 14a and the curved surface portion 14b (the upper tapered surface portion 14ba) and the dimension measurement is simplified by the straight portion. However, in such a countermeasure, an area in which a flow rate hardly changes occurs. For this reason, there is concern that a resolution (particularly, a resolution in the low flow rate range) may be degraded.

Further, a corner R is formed due to processing at the intersection portion between the seat surface portion 14a and the curved surface portion 14b (the upper tapered surface portion 14ba) or the intersection portion between the seat surface portion 14a and the straight portion. In order to prevent the sitting on the corner R, the outer diameter of the curved surface portion 14b or the straight portion needs to be smaller than the opening diameter of the narrowest portion 46s of the valve opening 46. As a result, there is concern that the rising flow rate is reduced insufficiently.

The invention has been made in view of the above-described circumstances and an object of the invention is to provide an electric valve capable of sufficiently reducing a rising flow rate while simplifying managing of the rising flow rate and effectively improving controllability in a low flow rate range.

### MEANS FOR SOLVING PROBLEM

In order to solve the above-described problems, according to the invention, an electric valve of the invention basically includes: a valve main body including a valve chamber and a valve seat attached valve opening; and a valve body changing a flow rate of a fluid flowing through the valve opening in response to a lift amount, in which the valve body is provided with a seat surface portion sitting on the valve seat in a contact state, with a valve body cylindrical portion connected to a lower side of the seat surface portion and having a constant outer diameter in a direction of a center axis O of the valve body, and with a curved surface portion connected to the lower side of the valve body cylindrical portion and having a curvature or an intersection angle with a line parallel to the center axis (O) of the valve body, the intersection angle continuously or gradually increasing while approaching to an end of the curved surface portion, and in which the valve opening is provided with a narrowest portion having an inner diameter that is larger than the constant outer diameter of the valve body cylindrical portion and an inner diameter of the valve seat is larger than the inner diameter of the narrowest portion.

Further, the curved surface portion comprises a plurality of stages including an upper tapered surface portion which is formed as a reverse conical surface.

Further, a portion of the valve opening between the narrowest portion and the valve seat has a tapered surface with an inner diameter continuously decreasing while approaching toward the narrowest portion, and the tapered surface of the portion of the valve opening is configured to be parallel to the upper tapered surface portion of the valve body.

In another desirable aspect, the narrowest portion is formed as a cylindrical surface.

In another desirable aspect, when the seat surface portion sits on the valve seat, a lower end of the valve body cylindrical portion is located at a position corresponding to an upper end of the narrowest portion.

In another desirable aspect, when the seat surface portion sits on the valve seat, a lower end of the valve body cylindrical portion is located below an upper end of the narrowest portion.

### EFFECT OF THE INVENTION

According to the invention, the valve opening of the valve main body is provided with the narrowest portion having a diameter larger than a diameter of the valve body side straight portion and the inner diameter of the valve seat is larger than the inner diameter of the narrowest portion. For that reason, since the seating portion and the rising flow rate control portion are set to different positions, it is possible to simplify managing of the rising flow rate and to sufficiently reduce the rising flow rate compared to, for example, the conventional electric valve in which the inner diameter of the valve seat is the same as the inner diameter of the narrowest portion. Thus, it is possible to effectively improve controllability in a low flow rate range.

Further, since a portion between the narrowest portion and the valve seat of the valve opening is formed as the small-diameter portion of which the inner diameter continuously decreases while approaching toward the narrowest portion and the small-diameter portion of the valve opening is formed in parallel to the curved surface portion of the valve body, it is possible to continuously set the flow rate characteristics.

### BRIEF DESCRIPTION OF DRAWINGS

Fig. 1 is a longitudinal sectional view illustrating an embodiment of an electric valve;
Fig. 2 is an enlarged longitudinal sectional view illustrating a main part of an electric valve, which is not part of the present invention;
Fig. 3 is a diagram illustrating flow rate characteristics of an electric valve, which is not part of the present invention;
Fig. 4 is an enlarged longitudinal sectional view illustrating a main part of another example of electric valve;
Fig. 5 is an enlarged longitudinal sectional view illustrating a main part of still another example of electric valve;
Fig. 6 is a diagram illustrating flow rate characteristics of an electric valve, which is not part of the present invention; and
Fig. 7 is an enlarged longitudinal sectional view illustrating a main part of an electric valve of a related art.

### MODE(S) FOR CARRYING OUT THE INVENTION

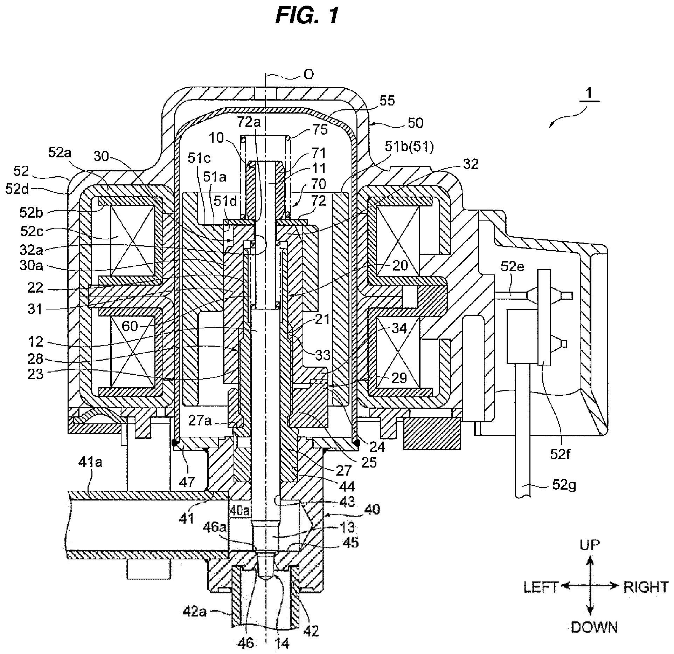

Hereinafter, examples will be described with reference to the drawings. In each of the drawings, in order to help the understanding of the invention and the convenience of drawings, a gap formed between members and a separation distance between members are drawn exaggeratedly in some cases. Further, in the present specification, a description indicating positions and directions such as up, down, right, and left is based on a direction indicated by an arrow in Fig. 1 and does not indicate positions and directions in an actual use state.

Fig. 1 is a longitudinal sectional view illustrating an electric valve.

An electric valve 1 illustrated in the drawings is used to adjust a flow rate of a refrigerant of, for example, a heat pump type cooling and heating system and mainly includes a valve shaft 10 with a valve body 14, a guide bush 20, a valve shaft holder 30, a valve main body 40, a can 55, a stepping motor 50 including a rotor 51 and a stator 52, a compression coil spring 60, a retaining locking member 70, a screw feeding mechanism 28, and a lower stopper mechanism 29.

The valve shaft 10 includes an upper small-diameter portion 11, an intermediate large-diameter portion 12, and a lower small-diameter portion 13 from above and the valve body 14 for controlling a flow rate of a fluid (a refrigerant) flowing through a valve opening 46 is integrally formed at a lower end of the lower small-diameter portion 13.

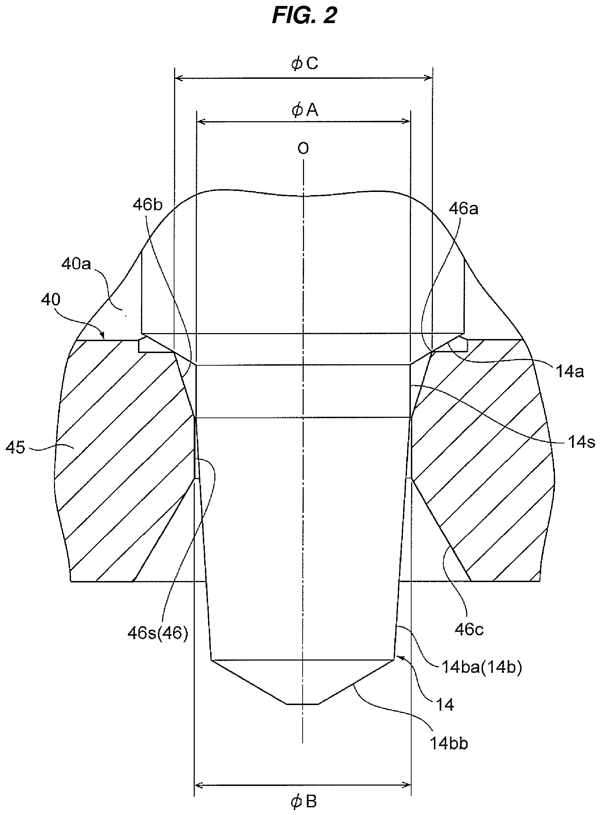

As understood with reference to Figs. 1 and 2, the valve body 14 includes a seat surface portion 14a which is formed as a reverse conical surface and is in contact with (seated on) the valve seat 46a, a straight portion (a valve body side straight portion) 14s which is formed as a cylindrical surface (having the same outer diameter in the elevation direction) having a diameter slightly smaller than that of the lower small-diameter portion 13 of the valve shaft 10 and is connected to the lower side of the seat surface portion 14a, and a curved surface portion 14b which is connected to the lower side of the straight portion 14s and changes a flow rate of a fluid flowing through the valve opening 46 in response to the lift amount from the valve seat 46a from above (the side of the valve chamber 40a). The curved surface portion 14b includes a plurality of (here, two) stages of inverse truncated cone-shaped tapered portions in which a control angle (an intersection angle with a line parallel to the center axis O of the valve body 14) increases while approaching toward a front end. Here, the plurality of stages (two stages) of inverse truncated cone-shaped tapered surface portions include an upper tapered surface portion 14ba which is formed as a reverse conical surface and a lower tapered surface portion 14bb which is formed as a reverse conical surface having a control angle larger than that of the upper tapered surface portion 14ba.

The guide bush 20 includes a cylindrical portion 21 into which (the intermediate large-diameter portion 12 of) the valve shaft 10 is inserted to be relatively movable (slidable) in the direction of the axis O and rotatable about the axis O and an extension portion 22 which extends upward from an upper end of the cylindrical portion 21 and has an inner diameter larger than that of the cylindrical portion 21 and into which an upper end side of the intermediate large-diameter portion 12 of the valve shaft 10 and a lower end side of the upper small-diameter portion 11 are inserted. The outer periphery of the cylindrical portion 21 of the guide bush 20 is provided with a fixing screw portion (a male screw portion) 23 constituting one of the screw feeding mechanism 28 for elevating the valve body 14 of the valve shaft 10 relative to the valve seat 46a of the valve main body 40 in response to the rotational driving of the rotor 51. Further, a lower portion (a lower portion of a fixing screw portion 23) of the cylindrical portion 21 has a large diameter and is formed as a fitting portion 27 into a fitting hole 44 of the valve main body 40. A lower stopper 25 is fixed to the fixing screw portion 23 (a lower portion of the valve shaft holder 30) by threading and the outer periphery of the lower stopper 25 is integrally provided with a fixed stopper body 24 which is formed in a protruding manner, regulates the downward rotation of the valve shaft holder 30 (that is, the valve shaft 10 connected to the valve shaft holder 30), and constitutes one of the lower stopper mechanism 29. In addition, an upper surface 27a of the fitting portion 27 is formed as a stopper portion which regulates the downward movement of the lower stopper 25 (in other words, the stopper portion defines the downward limit position or the lowest movement position of the lower stopper 25).

The valve shaft holder 30 includes a cylindrical portion 31 into which the guide bush 20 is inserted and a ceiling portion 32 provided with an insertion hole 32a through which the upper end of (the upper small-diameter portion 11 of) the valve shaft 10 is inserted. The inner periphery of the cylindrical portion 31 of the valve shaft holder 30 is provided with a movable screw portion (a female screw portion) 33 which is threaded into the fixing screw portion 23 of the guide bush 20 and constitutes the screw feeding mechanism 28 and an outer peripheral lower end of the cylindrical portion 31 is integrally provided with a movable stopper body 34 which constitutes the other of the lower stopper mechanism 29.

Further, a compression coil spring 60 which urges the valve shaft 10 and the valve shaft holder 30 to be separated from each other in the elevation direction (the direction of the axis O), in other words, urges the valve shaft 10 (the valve body 14) in the downward direction (the valve closing direction) at all times is loaded between a lower surface of the ceiling portion 32 of the valve shaft holder 30 and a step surface formed between the intermediate large-diameter portion 12 and the upper small-diameter portion 11 of the valve shaft 10 to be externally inserted into the upper small-diameter portion 11 of the valve shaft 10.

The valve main body 40 is made of a metal cylindrical body such as brass or SUS. The valve main body 40 includes the valve chamber 40a into and from which a fluid is introduced and derived, a first guide pipe 41a is connected and fixed to a first horizontal opening 41 provided at the side portion of the valve chamber 40a by a brazing or the like, the ceiling portion of the valve chamber 40a is provided with an insertion hole 43 through which (the intermediate large-diameter portion 12 of) the valve shaft 10 is inserted to be relatively movable (slidable) in the direction of the axis O and relatively rotatable about the axis O and a fitting hole 44 to which a lower portion (the fitting portion 27) of the guide bush 20 is fitted and fixed, and a second guide pipe 42a is connected and fixed to a second vertical opening 42 provided in the lower portion of the valve chamber 40a by a brazing or the like. Further, a valve seat portion 45 which is a bottom wall provided between the valve chamber 40a and the second opening 42 is provided with the valve opening 46 with the valve seat 46a toward and away which the valve body 14 moves.

As understood with reference to Figs. 1 and 2, the valve opening 46 includes a small-diameter portion 46b which is formed as a reverse tapered surface connected from above (the side of the valve chamber 40a) to the valve seat 46a and continuously decreasing in inner diameter while approaching downward (toward the narrowest portion 46s), a narrowest portion 46s (a portion having the smallest opening diameter in the valve opening 46) which is formed as a cylindrical surface (having the same inner diameter in the elevation direction) connected to the lower side of the small-diameter portion 46b, and a large-diameter portion 46c which is formed as a truncated conical surface connected to the lower side of the narrowest portion 46s and continuously increasing in inner diameter while approaching downward.

The inner diameter (the opening diameter) (ϕC) of the valve seat 46a is designed to have a diameter smaller than the lower small-diameter portion 13 of the valve shaft 10, the inner diameter (the opening diameter) (ϕB) of the narrowest portion 46s is designed to have a diameter larger than the outer diameter (ϕA) of the straight portion 14s of the valve body 14, and the inner diameter (ϕC) of the valve seat 46a is designed to be larger than the inner diameter (ϕB) of the narrowest portion 46s.

Here, the dimensional shapes of components are set so that a lower end of the straight portion 14s and an upper end of the narrowest portion 46s are located at the substantially same position when the seat surface portion 14a of the valve body 14 sits on the valve seat 46a (a state illustrated in Figs. 1 and 2).

Meanwhile, a flange-shaped plate 47 is fixed to an upper end of the valve main body 40 by caulking or the like and a lower end of a ceiling attached cylindrical can 55 is hermetically bonded to a stepped portion provided in the outer periphery of the flange-shaped plate 47 by butt welding.

The rotor 51 is rotatably disposed at the inside of the can 55 and the outside of the guide bush 20 and the valve shaft holder 30 and the stator 52 including a yoke 52a, a bobbin 52b, a stator coil 52c, and a resin mold cover 52d is disposed at the outside of the can 55 to rotationally drive the rotor 51. A plurality of lead terminals 52e are connected to the stator coil 52c, a plurality of lead wires 52g are connected to the lead terminals 52e through a substrate 52f, and the rotor 51 disposed inside the can 55 is rotated about the axis O by the energization excitation to the stator coil 52c.

The rotor 51 disposed inside the can 55 is supported while engaging with the valve shaft holder 30 and the valve shaft holder 30 (integrally) rotates along with the rotor 51.

Specifically, the rotor 51 is formed as a double pipe structure including an inner cylinder 51a, an outer cylinder 51b, and a connection portion 51c connecting the inner cylinder 51a and the outer cylinder 51b to each other at a position rotated by a predetermined angle about the axis O and the inner periphery of the inner cylinder 51a is provided with a longitudinal groove 51d which extends in the direction of the axis O (the vertical direction) (for example, at an interval of 120° about the axis O).

Meanwhile, (an upper half portion of) the outer periphery of the valve shaft holder 30 is provided with a protrusion 30a extending in the vertical direction (for example, at an interval of 120° about the axis O) and an upward locking surface (not illustrated) supporting the rotor 51 is formed at both sides of the lower portion of the protrusion 30a.

When the longitudinal groove 51d of the inner cylinder 51a of the rotor 51 engages with the protrusion 30a of the valve shaft holder 30 and the lower surface of the inner cylinder 51a of the rotor 51 comes into contact with the locking surface of the valve shaft holder 30, the rotor 51 is supported and fixed while being positioned to the valve shaft holder 30 and the valve shaft holder 30 rotates along with the rotor 51 while supporting the rotor 51 inside the can 55.

A retaining locking member 70 which includes a push nut 71 externally fitted and fixed to an upper end of (the upper small-diameter portion 11 of) the valve shaft 10 by press-inserting and welding and a rotor retainer 72 corresponding to a disc-shaped member interposed between the push nut 71 and the rotor 51 and having an insertion hole 72a formed at the center thereof so that the upper end of the valve shaft 10 is inserted is disposed above the rotor 51 and the valve shaft holder 30 in order to prevent the relative movement between the valve shaft holder 30 and the rotor 51 in the elevation direction (in other words, so that the rotor 51 is pressed downward with respect to the valve shaft holder 30) and to connect the valve shaft 10 and the valve shaft holder 30 to each other. That is, the rotor 51 is interposed between the rotor retainer 72 and the valve shaft holder 30 urged upward by the urging force of the compression coil spring 60. In addition, the height from the upper end of the valve shaft holder 30 to the locking surface (in the vertical direction) is the same as the height of the inner cylinder 51a of the rotor 51 (in the vertical direction) and the upper surface (the ceiling portion 32 of) of the valve shaft holder 30 comes into contact with the lower surface (the flat surface) of the rotor retainer 72.

Further, a return spring 75 formed as a coil spring urging the valve shaft holder 30 toward the guide bush 20 is attached to the push nut 71 fixed to the upper end of the valve shaft 10 in order to prevent a problem in which the valve shaft holder 30 moves upward too much relative to the guide bush 20 in an operation state so that the screw-connection between the fixing screw portion 23 of the guide bush 20 and the movable screw portion 33 of the valve shaft holder 30 is released.

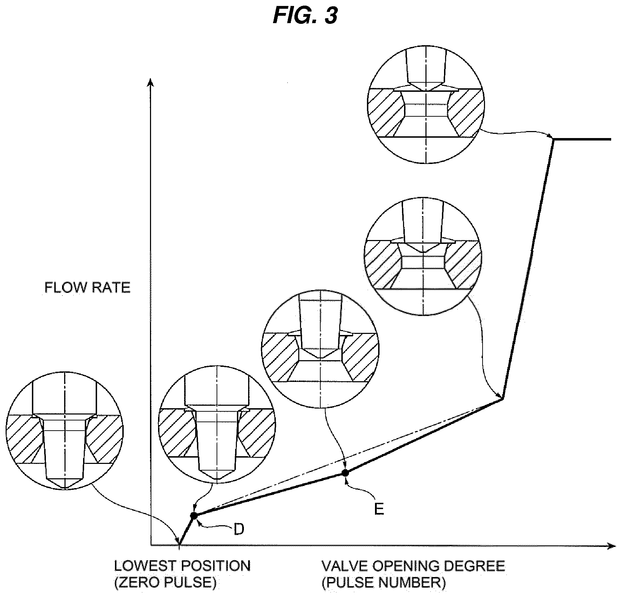

In the electric valve 1 with such a configuration, when the rotor 51 is rotated by the energization excitation to (the stator coil 52c of) the stator 52, the valve shaft holder 30 and the valve shaft 10 are rotated integrally. At this time, the valve shaft 10 is elevated with the valve body 14 by the screw feeding mechanism 28 including the fixing screw portion 23 of the guide bush 20 and the movable screw portion 33 of the valve shaft holder 30. Accordingly, a gap between the valve body 14 and the valve seat 46a (a lift amount and a valve opening degree) increases and decreases so that a flow rate of a fluid such as a refrigerant is adjusted (see Fig. 3). Further, when the movable stopper body 34 of the valve shaft holder 30 comes into contact with the fixed stopper body 24 of the lower stopper 25 fixed to the guide bush 20 so that the valve body 14 is located at the lowest position (when the lift amount of the valve body 14 is zero), (the seat surface portion 14a of) the valve body 14 sits on the valve seat 46a so that the valve opening 46 is fully closed and thus a flow of a fluid such as a refrigerant in the valve opening 46 is interrupted (a state illustrated in Figs. 1 and 2).

Here, when the inner diameter (the opening diameter) of the valve seat 46a of the valve opening 46 is larger than the inner diameter (the opening diameter) of the narrowest portion 46s and the seat surface portion 14a of the valve body 14 sits on the valve seat 46a (that is, the valve body 14 is located at the lowest position), a lower end of the straight portion 14s is located at a position corresponding to the upper end of the narrowest portion 46s. For that reason, the rising flow rate between (the upper tapered surface portion 14ba of) the curved surface portion 14b of the valve body 14 and (the upper end of) the narrowest portion 46s of the valve opening 46 (in other words, the lower end of the small-diameter portion 46b) is controlled immediately after the valve body 14 is elevated and the seat surface portion 14a of the valve body 14 is separated from the valve seat 46a (in other words, an upper end of the small-diameter portion 46b) (immediately after the valve is opened) (a state indicated by a point D of Fig. 3).

In this way, since the seating portion and the rising flow rate control portion are set to different positions, it is possible to simplify managing of the rising flow rate and to sufficiently reduce the rising flow rate compared to, for example, the conventional electric valve in which the inner diameter of the valve seat is the same as the inner diameter of the narrowest portion. Thus, it is possible to effectively improve controllability in a low flow rate range.

Further, since the seating portion (the contact portion between the valve seat 46a and the seat surface portion 14a of the valve body 14) is set to a position separated from a corner R (formed at an intersection portion between the seat surface portion 14a and the straight portion 14s), the inner diameter (ϕB) of the narrowest portion 46s can be set to be substantially equal to the outer diameter (ϕA) of the straight portion 14s. Regarding this point, the rising flow rate can be sufficiently reduced and the controllability in the low flow rate range can be effectively improved.

Additionally, in the above-described example, since the small-diameter portion 46b between the valve seat 46a and the narrowest portion 46s of the valve opening 46 is not parallel to (the upper tapered surface portion 14ba of) the curved surface portion 14b of the valve body 14 (in the example illustrated in the drawings, the inclination of the small-diameter portion 46b with respect to the center axis O is larger than the inclination (of the upper tapered surface portion 14ba) of the curved surface portion 14b with respect to the center axis O), there is an inflection point (a point E in Fig. 3) of flow rate characteristics in the low flow rate range (an area having a small valve opening degree). However, according to the present invention, when the small-diameter portion 46b of the valve opening 46 is set to be parallel to (the upper tapered surface portion 14ba of) the curved surface portion 14b of the valve body 14, the flow rate characteristics in the low flow rate range can be continuously set (without any inflection point) (for example, the flow rate characteristics indicated by the one-dotted chain line of Fig. 3 are obtained) and thus a variation in flow rate in the intermediate opening degree can be suppressed.

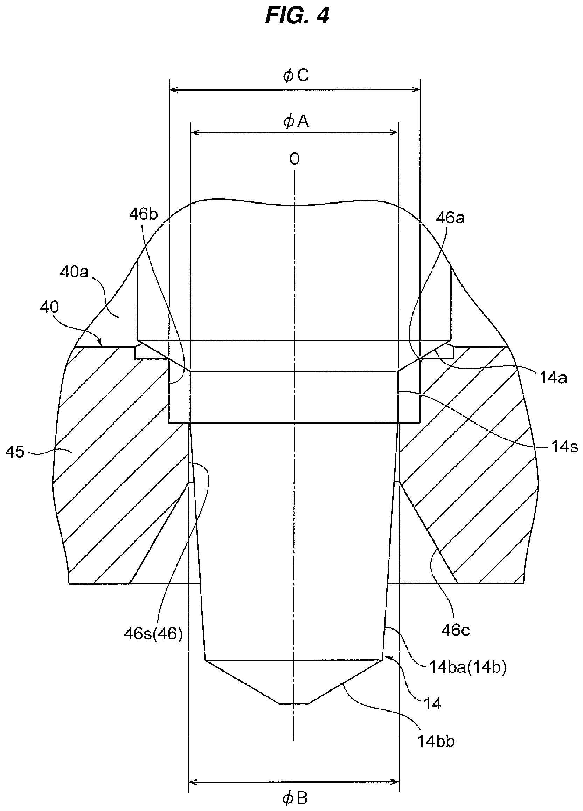

Additionally also according to the present invention, a portion between the valve seat 46a and the narrowest portion 46s of the valve opening 46 is formed as the small-diameter portion 46b corresponding to the reverse tapered surface of which the inner diameter continuously decreases while approaching downward. In known examples, the portion between the valve seat and the narrowest portion of the valve opening is a stepped portion (in the example illustrated in Fig. 4, a stepped portion having one stage) of which an inner diameter gradually decreases while approaching downward, for example, as illustrated in Fig. 4.

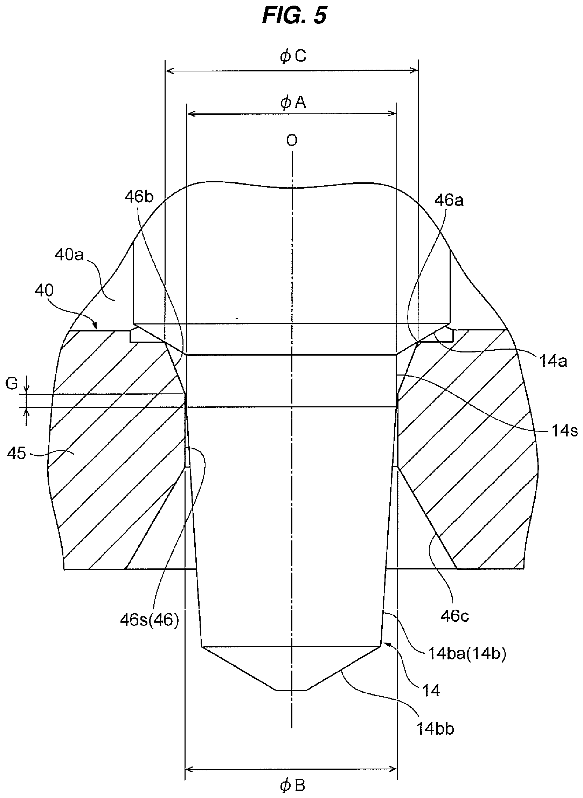

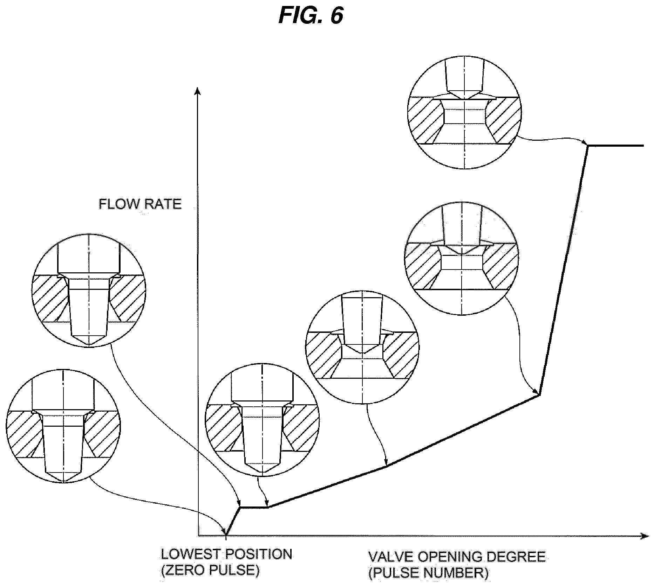

Further, in the above-described example, the lower end of the straight portion 14s is located at a position corresponding to the upper end of the narrowest portion 46s when the seat surface portion 14a of the valve body 14 sits on the valve seat 46a, but when considering a variation in dimension of components, it is desirable to set dimensional shapes of components so that the lower end of the straight portion 14s is located below the upper end of the narrowest portion 46s (for example, by an amount G in the elevation direction), in other words, the lower portion of the straight portion 14s and the upper portion of the narrowest portion 46s overlap each other by the amount G, for example, in the elevation direction (the vertical direction) when the seat surface portion 14a of the valve body 14 sits on the valve seat 46a, for example, as illustrated in Fig. 5. In this case, as illustrated in Fig. 6, an area without any variation in flow rate in the flow rate characteristics slightly occurs.

Further, in the above-described example, the curved surface portion 14b of the valve body 14 is formed as the plurality of stages of inverse truncated cone-shaped tapered surface portions (the upper tapered surface portion 14ba and the lower tapered surface portion 14bb) of which the control angle gradually increases while approaching toward the front end, but the invention is not limited thereto. For example, the curved surface portion may be, of course, formed as a combination of fan ellipsoidal surface and the inverse truncated cone-shaped tapered surface portions having one or more stages.

### EXPLANATIONS OF LETTERS OR NUMERALS

- 1:: electric valve
- 10: valve shaft
- 14: valve body
- 14a: seat surface portion
- 14b: curved surface portion
- 14ba: upper tapered surface portion
- 14bb: lower tapered surface portion
- 14s: straight portion
- 20: guide bush
- 21: cylindrical portion
- 23: fixing screw portion (male screw portion)
- 28: screw feeding mechanism
- 29: lower stopper mechanism
- 30: valve shaft holder
- 33: movable screw portion (female screw portion)
- 40: valve body
- 40a: valve chamber
- 41: first opening
- 41a: first guide pipe
- 42: second opening
- 42a: second guide pipe
- 45: valve seat portion
- 46: valve opening
- 46a: valve seat
- 46b: small-diameter portion
- 46c: large-diameter portion
- 46s: narrowest portion
- 47: flange portion
- 50: stepping motor
- 51: rotor
- 52: stator
- 55: can
- 60: compression coil spring
- 70: retaining locking member
- O: axis
- ϕA: outer diameter of straight portion
- ϕB: inner diameter (opening diameter) of narrowest portion
- ϕC: inner diameter (opening diameter) of valve seat

## Claims

1. An electric valve (1) comprising:
a valve main body (40) including a valve chamber (40a) and a valve seat (46a) attached to a valve opening (46); and
a valve body (14) for changing a flow rate of a fluid flowing through the valve opening (46) in response to a lift amount,
wherein the valve body (14) is provided with a seat surface portion (14a) for sitting on the valve seat (46a) in a contact state, with a valve body cylindrical portion (14s) connected to the lower side of the seat surface portion (14a) and having a constant outer diameter (ϕA) in a direction of a center axis (O) of the valve body (14), and with a curved surface portion (14b) connected to the lower side of the valve body cylindrical portion (14s) and having a curvature or an intersection angle with a line parallel to the center axis (O) of the valve body (14), the intersection angle continuously or gradually increasing while approaching to an end of the curved surface portion (14b),
wherein the valve opening (46) is provided with a narrowest portion (46s) having a an inner diameter (ϕB) that is larger than the constant outer diameter (ϕA) of the valve body cylindrical portion (14s) and an inner diameter (ϕC) of the valve seat (46a) is larger than the inner diameter (ϕB) of the narrowest portion (46s),
wherein a portion (46b) of the valve opening (46) which is between the narrowest portion (46s) and the valve seat (46a) has a tapered surface with an inner diameter continuously decreasing while approaching toward the narrowest portion (46s),
**characterized in that** the curved surface portion (14b) comprises a plurality of stages including an upper tapered surface portion (14ba) which is formed as a reverse conical surface, and tapered surface of the portion (46b) of the valve opening (46) is configured to be parallel to the upper tapered surface portion (14ba) of the valve body (14).

2. The electric valve (1) according to claim 1,
wherein the narrowest portion (46s) is formed as a cylindrical surface.

3. The electric valve (1) according to claim 1,
wherein when the seat surface portion (14a) sits on the valve seat (46a), a lower end of the valve body cylindrical portion (14s) is located at a position corresponding to an upper end of the narrowest portion (46s).

4. The electric valve (1) according to claim 1,
wherein when the seat surface portion (14a) sits on the valve seat (46a), a lower end of the valve body cylindrical portion (14s) is located below an upper end of the narrowest portion (46s).

## Patentansprüche

1. Ein elektrisches Ventil (1), das aufweist:
einen Ventilhauptkörper (40), der eine Ventilkammer (40a) und einen Ventilsitz (46a) enthält, der an einer Ventilöffnung (46) befestigt ist; und
einen Ventilkörper (14) zum Ändern einer Durchflussrate eines Fluids, welches durch die Ventilöffnung (46) in Antwort auf einen Hubbetrag fließt,
wobei der Ventilkörper (14) mit einem Sitz-Oberflächenbereich (14a) zum Sitzen auf dem Ventilsitz (46a) in einem Kontaktierungszustand versehen ist, mit einem zylindrischen Ventilkörperbereich (14s), der mit der unteren Seite des Sitz-Oberflächenbereichs (14a) verbunden ist, und der einen konstanten äußeren Durchmesser (∅A) in einer Richtung einer Mittelachse (O) des Ventilkörpers (14) hat, und mit einem gekrümmten Oberflächenbereich (14b), der mit der Unterseite des zylindrischen Ventilkörperbereichs (14s) verbunden ist, und der eine Krümmung oder einen Schnittwinkel mit einer Linie hat, die parallel zur Mittelachse (O) des Ventilkörpers (14) verläuft, wobei der Schnittwinkel bei Annäherung an ein Ende des gekrümmten Oberflächenbereichs (14b) stetig oder allmählich zunimmt,
wobei die Ventilöffnung (46) mit einem engsten Bereich (46s) versehen ist, der einen inneren Durchmesser (∅B) hat, der größer als der konstante äußere Durchmesser (∅A) des zylindrischen Ventilkörperbereichs (14s) ist, und wobei ein innerer Durchmesser (∅C) des Ventilsitzes (46a) größer ist als der innere Durchmesser (∅B) des engsten Bereichs (46s),
wobei ein Bereich (46b) der Ventilöffnung (46), der zwischen dem engsten Bereich (46s) und dem Ventilsitz (46a) ist, eine spitz zulaufende Oberfläche mit einem inneren Durchmesser hat, der bei Annäherung an den engsten Bereich (46s) stetig abnimmt,
**gekennzeichnet dadurch, dass**
der gekrümmte Oberflächenbereich (14b) eine Vielzahl von Abschnitten aufweist, die einen oberen spitz zulaufenden Oberflächenbereich (14ba) beinhalten, der als eine umgekehrte Kegelfläche geformt ist, und
spitz zulaufende Oberfläche des Bereichs (46b) der Ventilöffnung (46) ist dazu konfiguriert, parallel zu dem oberen spitz zulaufenden Oberflächenbereich (14ba) des Ventilkörpers (14) zu sein.

2. Das elektrische Ventil (1) gemäß Anspruch 1,
wobei der engste Bereich (46s) als eine zylindrische Oberfläche geformt ist.

3. Das elektrische Ventil (1) gemäß Anspruch 1,
wobei, wenn der Sitz-Oberflächenbereich (14a) auf dem Ventilsitz (46a) sitzt, ein unteres Ende des zylindrischen Ventilkörperbereichs (14s) sich an einer Stelle befindet, die einem oberen Ende des engsten Bereichs (46s) entspricht.

4. Das elektrische Ventil (1) gemäß Anspruch 1,
wobei, wenn der Sitz-Oberflächenbereich (14a) auf dem Ventilsitz (46a) sitzt, ein unteres Ende des zylindrischen Ventilkörperbereichs (14s) sich unterhalb von einem oberen Ende des engsten Bereichs (46s) befindet.

## Revendications

1. Une valve électrique comprenant :
un corps principal de valve (40) contenant une chambre de valve (40a) et un siège de valve (46a) qui est attaché à une ouverture de valve (46); et
un corps de valve (14) pour changer un débit de fleuve d'un fluide qui s'écoule à travers de l'ouverture de valve (46) en réponse à une quantité de soulèvement,
dans laquelle le corps de valve (14) est pourvu d'une partie de surface de siège (14a) pour placement sur le siège de valve (46a) dans un état de contact, avec une partie cylindrique de corps de valve (14s) connectée au côté inférieur de la partie de surface de siège (14a) et qui a un diamètre extérieur constant (∅A) dans une direction d'un axe central (O) du corps de valve (14), et avec une partie de surface courbée (14b) connectée au côté inférieur de la partie cylindrique de corps de valve (14s), et qui a une courbure ou un angle d'intersection avec une ligne parallèle à l'axe central (O) du corps de valve (14), dont l'angle d'intersection augmente continûment ou graduellement en s'approchant à un bout de la partie de surface courbée (14b),
dans laquelle l'ouverture de valve (46) est pourvue d'une partie plus étroite (46s) qui a un diamètre intérieur (∅B) qui est plus large que le diamètre extérieure constant (∅A) de la partie cylindrique de corps de valve (14s) et un diamètre intérieur (∅C) du siège de valve (46a) est plus large que le diamètre intérieur (∅B) de la partie plus étroite (46s),
dans laquelle la partie (46b) de l'ouverture de valve (46), qui est entre la partie plus étroite (46s) et le siège de valve (46a), a une surface effilée avec un diamètre intérieur qui se réduit continûment en s'approchant à la partie plus étroite (46s),
**caractérisé en ce que**
la partie de surface courbée (14b) comprend une pluralité d'étapes, les étapes incluant une partie de surface supérieure effilée (14ba) qui est formée comme une surface conique renversée, et
surface effilée (46b) de l'ouverture de valve (46) est configurée pour être parallèle à la partie de surface supérieure effilée (14ba) du corps de valve (14a).

2. La valve électrique (1) selon revendication 1,
dans laquelle la partie plus étroite (46s) est formée comme une surface cylindrique.

3. La valve électrique selon revendication 1,
dans laquelle, quand la partie de surface de siège (14) est placée sur le siège de valve (46a), un bout inférieur de la partie cylindrique de corps de valve (14s) se situe à une position qui correspond à un bout supérieur de la partie plus étroite (46s).

4. La valve électrique selon revendication 1,
dans laquelle, quand la partie de surface de siège (14) est placée sur le siège de valve (46a), un bout inférieur de la partie cylindrique de corps de valve (14s) se situe au-dessous d'un bout supérieur de la partie plus étroite (46s).
